# EUROPEAN PATENT APPLICATION

(11) **EP 2 339 886 A1**
(43) Date of publication of application: **29.06.2011**
(21) Application number: 09820544.6
(22) Date of filing: 08.10.2009
(51) Int. Cl.: H04W 52/02, H04M 11/00, H04W 84/10

(54) **WIRELESS BASE STATION DEVICE AND POWER SUPPLY CONTROL METHOD THEREFOR**

(30) Priority: 15.10.2008 JP 2008266193
(71) Applicant: NEC Corporation, Minato-ku Tokyo 108-8001 (JP)
(72) Inventor: TAKAGI, Kenki, Tokyo 108-8001 (JP)
(74) Representative: Reeve, Nicholas Edward
(86) International application number: PCT/JP2009/067527
(87) International publication number: WO 2010/044366

(57) **Abstract**

Disclosed are a wireless base base station and a power control method therefor with which a wireless base station device installed in a home or office is capable of high-speed data communication with a relatively inexpensive price plan even when a transmission from a portable terminal is received during a low power consumption mode. At a preset time, or when a power control unit (13) detects that a portable terminal is not within the wireless area of a wireless base station device, the supply of power to a wireless transmission unit (11) and a wired communication unit (12) by a power supply unit (14) is stopped, and when a wireless reception unit (10) receives a transmission request from a portable terminal, power is supplied to the wireless transmission unit (11) and the wired communication unit (12) by the power supply unit (14).

## Description

### Technical Field

The present invention relates to a wireless base station device and a power control method therefor.

### Background Art

In-home wireless base station devices are being developed, such as a femto-cell base station for deploying wireless base station device in homes.

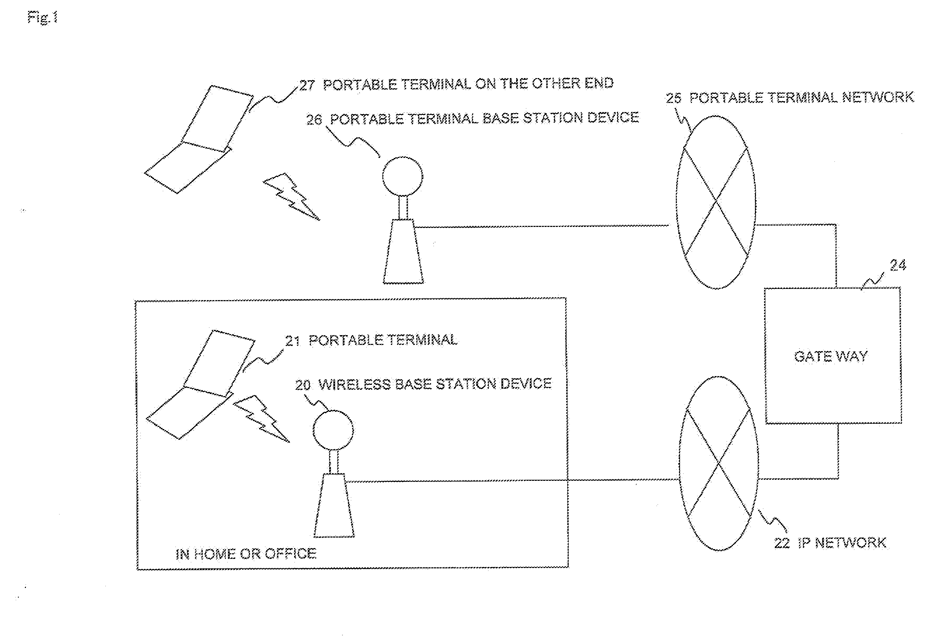

Fig. 1 is a block diagram showing the configuration of a system which employs a wireless base station device in a home or in an office.

Wireless base station device 20 is installed in a home or in an office. Portable terminal 21 in the home or office, when transmitting to portable terminal 27 on the other end, first communicates with wireless base station device 20 installed in the home or office, not with portable terminal base station 26 that is connected to portable terminal network 25. Wireless base station device 20 connects a line to portable terminal base station 26 through IP network 22, gateway 24, and portable terminal network 25. In this way, communications can be made between portable terminal 21 and portable terminal 27 on the other end.

By installing a wireless base station device in a home or in an office, a portable telephone can more easily make a call indoors. In addition, since a wireless base station device installed in a home or in an office is used only by limited users such as family members, employees or the like, the wireless base station device can provide faster communications than portable terminal base station devices in general networks.

When a user introduces a wireless base station device in a home or in an office, a mobile carrier can improve communication speeds at a lower cost than through the additional installation of outdoor base stations. For this reason, mobile carriers have begun providing services which apply discounted charge plans to communications through wireless base station devices installed in homes, offices and the line.

Unlike a portable terminal base station device in a general network, a wireless base station device installed in a home or in an office is a device used by limited users such as family member, employees or the like. Accordingly, when the user is not present, or when the user has no schedule to use the device, the wireless base station device is preferably powered off except for minimally required functional blocks, in order to reduce power consumption.

However, when the wireless base station device is powered off except for minimally required functional blocks, the user is required to recover the wireless base station device each time he uses it.

In this regard, a low-power consumption mode refers to a state of a wireless base station device where the power is off except for minimally required functional blocks of the wireless base station device, while a normal mode refers to a state of the wireless base station device where the power is on in all functional blocks thereof.

Conventionally, for recovering a wireless base station device from the low-power consumption mode to the normal mode, a manipulation is required, such as manually depressing the power on button again, which occurs in a manual operation to restart a notebook personal computer or the like.

Patent Literature 1 describes a technique for transitioning a wireless base station to a normal mode when a command exclusively for requesting a wakeup is transmitted from a portable terminal to the wireless base station which is in a low-power consumption mode.

Patent Literature 2 describes an example of searching subscriber information in response to a position registration request or a call request from an originating terminal which has moved into a coverage area,

Patent Literature 3 in turn describes an example in which an exchanger verifies a mobile device.

### Citation List

### Patent Literature

Patent Literature 1: JP-2002-158609A
Patent Literature 2: JP-05-344203A
Patent Literature 3: JP-08-079832A

### Summary of Invention

### Technical Problem

The wireless base station devices of the background art as described above do not have means for automatically recovering from the low- power consumption mode to the normal mode. For this reason, the user may not be aware that the wireless base station device has been placed in the low-power consumption mode. If the user makes a call when the wireless base station device is in the low-power consumption mode, the portable terminal will directly connect to a portable terminal base station device in a normal network, instead of the wireless base station device installed in the home, office or the like. In this event, a problem arises in that a high-speed data communication is not performed for, and a discounted charge plan is not applied to the call.

It is therefore an object of the present invention to provide a wireless base station device which is capable of performing a high speed data communication with a discounted charge plan even if a call is originated from a portable terminal while the wireless base station device installed in a home, an office or the like is in a low-power consumption mode.

### Solution to Problem

To achieve the above object, an exemplary aspect of the present invention provides a wireless base station device that is connected to an IP network through a wireline and that is capable of communicating with a portable terminal over the air. The wireless base station device comprises:
a wireless reception unit for receiving data transmitted from the portable terminal;
a wireless transmission unit for transmitting data to the portable terminal;
a wired communication unit for transmitting data received by the wireless reception unit to the IP network, and for transmitting data received from the IP network to the wireless transmission unit;
a power supply unit for supplying a predetermined supply voltage to the wireless reception unit, the wireless transmission unit, and the wired communication unit; and
a power control unit for causing the power supply unit to stop supplying the power to the wireless transmission unit and the wired communication unit when the power control unit detects that the portable terminal is not present in a wireless area of the wireless base station device or when a previously set time is reached, and for causing the power supply unit to supply the power to the wireless transmission unit and the wired communication unit when the wireless reception unit receives a call origination request from the portable terminal.

### Advantageous Effects of Invention

In the present invention, it is capable of performing a high speed data communication with a discounted charge plan even if a call is originated from a portable terminal while the wireless base station device installed in a home, an office or the like is in a low-power consumption mode for users.

### Brief Description of Drawings

Fig. 1 is a block diagram showing the configuration of a system which employs the wireless base station device in a home or in an office.
Fig, 2 is a block diagram showing the configuration of a wireless base station device in one embodiment of the present invention;
Fig. 3 is a flow chart showing the operation of the wireless base station device shown in Fig. 2 when a power control unit thereof is in a normal mode:
Fig. 4 is a flow chart showing the operation of the wireless base station device shown in Fig. 2 when the power control unit thereof is in a low-power consumption mode; and

### Description of Embodiments

Next, an embodiment of the present invention will be described in detail with reference to the drawings.

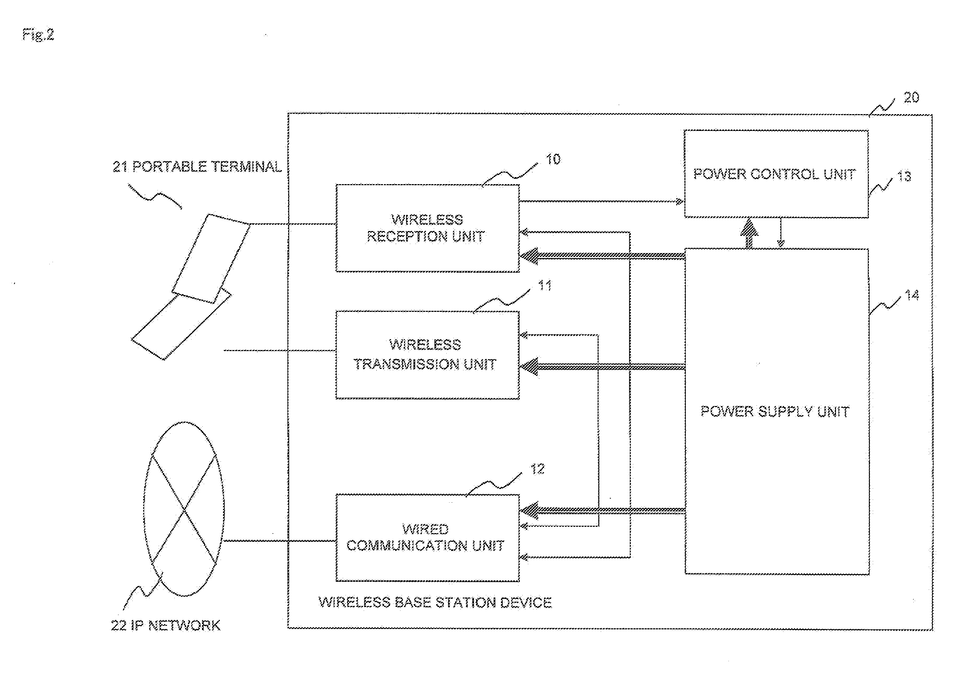

Fig. 2 is a block diagram showing the configuration of a wireless base station device in one embodiment of the present invention. As shown in Fig. 2, the wireless base station device of this embodiment comprises wireless reception unit 10, wireless transmission unit 11, wired communication unit 12, power control unit 13, and power supply unit 14.

Wireless reception unit 10 may be a wireless reception unit which has a function of receiving data transmitted from an external wireless communication device and which is built into a known wireless base station device for use in a mobile communication system Wireless reception unit 10 receives data from portable terminal 21, and analyzes the received data to see whether or not it is control data or communication data. When the received data is communication data, wireless reception unit 10 outputs the received data to wired communication unit 12. When the received data is control data which indicates a call origination request or a position registration request, wireless reception unit 10 outputs the received data to power control unit 13.

Wired communication unit 12 may be a wired communication unit which has a function of transmitting/receiving data to/from an external wired communication device and which is built into a known wireless base station device for use in a mobile communication system. Wired communication unit 12 transmits data received from wireless reception unit 10 to wired IP network 22. Also, wired communication unit 12 receives data from wired IP network 22, and analyzers the received data to see whether or not it is control data or communication data. When the received data is communication data, wired communication unit 12 outputs the received data to wireless transmission unit 11.

Wireless transmission unit 11 may be a wireless transmission unit which has a function of transmitting data to an external Wireless communication devise and which is built into a known wireless base station device for use in a mobile communication system. Wireless transmission unit 11 transmits data received from wired communication unit 12 to portable terminal 21.

Power supply unit 14 may be a generally used power supply unit which supplies power to the following units at the same time or which is capable of supplying power to these units individually on a per block basis: wireless reception unit 10, wireless transmission unit 11, wired communication unit 12, and power control unit 13.

Power control unit 13 can be implemented, for example, by an information processing device such as a computer comprising a CPU (Central Processing Unit) for executing processing in accordance with a program, an LSI (Large Scale Integration comprised of a variety of logic circuits, a storage device, or the like, Power control unit 13 causes power supply unit 14 to stop supplying the power to wireless transmission unit 11 and wired communication unit 12 when no position registration request is received from wireless reception unit 10. In this regard, power control unit 13 allows the user to set a time period such that if a position registration request is not received for the set time period, the power supply will be stopped, in order to prevent the power supply from frequently being stopped. Upon receipt of a time period previously set by the user, power control unit 13 causes power supply unit 14 to stop supplying the power to wireless transmission unit 11 and wired communication unit 12. On the other hand, when a call origination request is received from wireless reception unit 10, power control unit 13 causes power supply unit 14 to supply the power to wireless transmission unit 11 and wired communication unit 12. Also, when a position registration request is received from wireless reception unit 10, power control unit 13 causes power supply unit 14 to supply the power to wireless transmission unit 11 and wired communication unit 12, Further, power control unit 13 has a function of certifying whether or not a call origination request and a position registration request received from wireless reception unit 10 are requests received from a portable terminal off previously registered user.

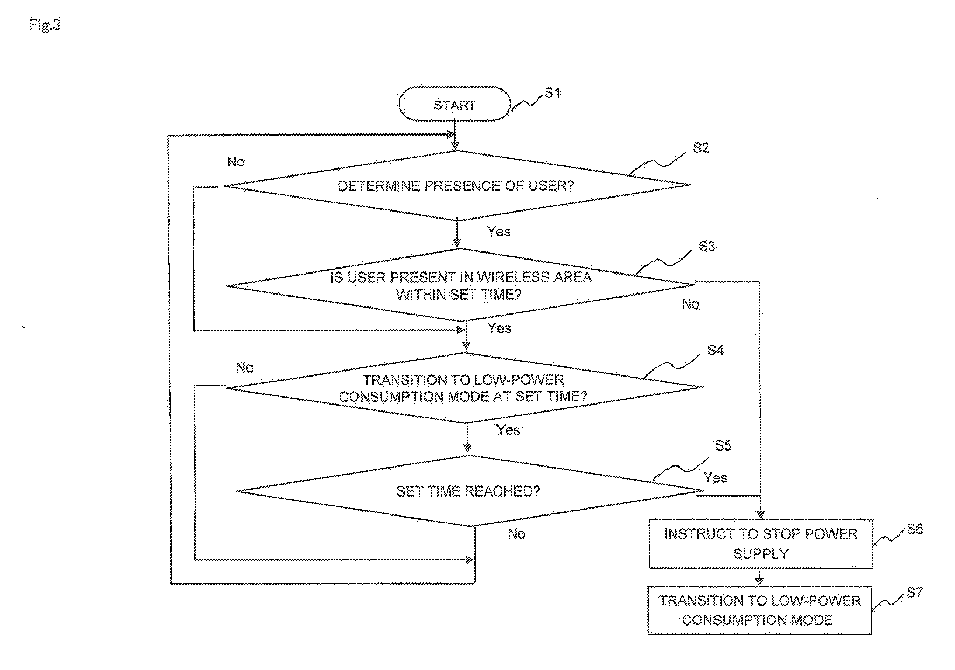

Next, the operation of power control unit 13 of the wireless base station device in the normal mode in accordance with this embodiment will be described with reference to a flow chart of Fig. 3. In this embodiment, a low-power consumption mode refers to a state in which the power is off in the wireless transmission unit and in wired communication unit of the wireless base station device, and a normal mode refers to a state in which the power is on in all function blocks of the wireless base station device.

Once the operation is started in the normal mode (step S1), power control unit 13 determines whether or not the wireless base station device should be transitioned to the low-power consumption mode, while the user is not present in a wireless area (step S2). To prevent the power supply from being frequently stopped, the user previously sets a time period to the wireless base station device, such that if a position registration request is not received rot the set time period, the power supply will be stopped. When the wireless base station device should be transitioned to the low-power consumption mode, while the user is not present in the wireless area, power control unit 13 determines whether or not the user has been present in the wireless area for the previously set time period (step S3). If the user has not been present in the wireless area for the set time period, power control unit 13 instructs power control unit 14 to stop the power supply to wireless transmission unit 11 and to wired communication unit 12 (step S6), thereby causing the wireless base station device to transition to the low-power consumption mode (step S7).

In this regard, it can be determined whether or not the user is present in the wireless area, for example, by a position registration request which is a parameter of "Establishment cause" included in a message "RRC Connection Bequest" defined by "3GPP (3rd Generation Partnership Project)." When the wireless base station device is designed for WCDMA, it can be determined that the user is present in the wireless area when a position registration request is received from a portable terminal through "PRACH (Physical Random Access Channel)." When the wireless base station device is designed for LTE (Long Term Evolution), it can be determined that the user is present in the wireless area when a position registration request is received from a portable terminal through "UL-SGH (Uplink Shared Channel),"

On the other hand, when it is determined at step S2 that the wireless base station device should not be transitioned to the low-power consumption mode, while the user is not present in the wireless area, or when it is determined at step S3 that the user has been present in the wireless area within the set time period, power control unit 13 determines whether or not the wireless base station device should be transitioned to the low-power consumption mode at a previously set time (step S4). The time at which the wireless base station device should be transitioned to the low-power consumption mode is previously set in the wireless base station device by the user. When the wireless base station device should be transitioned to the low-power consumption mode at the previously set time, power control unit 13 determines whether or not the time has been reached for the wireless base station device to transition to the low-power consumption mode (step S5). When the time has been reached for the wireless base station device to transition to the low-power consumption mode, power control unit 13 instructs power supply unit 14 to stop the power supply to wireless transmission unit 11 and to wired communication unit 12 (step S6), thereby causing the wireless base station device to transition to the low-power consumption mode (step S7).

On the other hand, when it is determined at step S4 that the wireless base station device should not be transitioned to the low-power consumption mode at a previously set time, or when it is determined at step S5 that the time has not been reached for the wireless base station device to transition to the low-power consumption mode, power control unit 13 returns to step S2 to repeat the determination processing as to whether or not the wireless base station device should be transitioned to the low-power consumption mode.

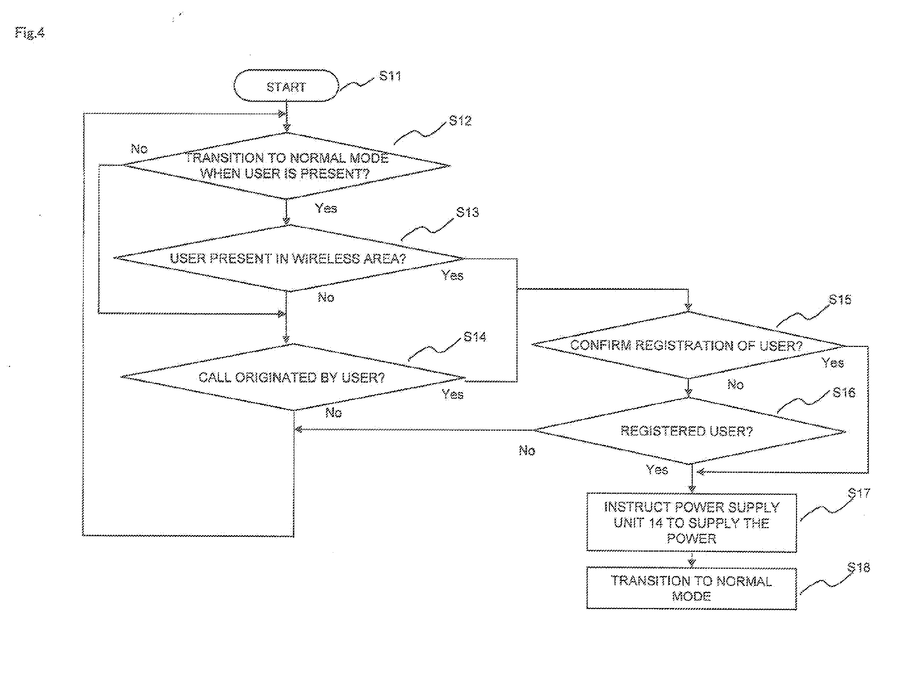

Next, the operation of power control unit 13 of the wireless base station device in the low-power consumption mode in accordance with this embodiment will be described with preference to a flow chart of Fig. 4.

Once the operation is started in the low-power consumption mode (step S11), power control unit 13 determines whether or not the wireless base station device should be transitioned to the normal mode, while the user is present in a wireless area (step S12). When the wireless base station device is to be transitioned to the normal mode, while the user is present in the wireless area, power control unit 13 determines whether or not the user is present in the wireless area (step S13). When the user is present in the wireless area, power control unit 13 goes to step S15.

On the other hand, when the wireless base station device should not be transitioned to the normal mode, while the user is present in the wireless area, or when the user is not present in the wireless area, power control unit 13 determines whether or not the user has originated a call (step S14). When the user has originated a call, power control unit 13 goes to step S15.

In this regard, it can be determined whether or not the user has originated a call, for example, by a call origination request which is a parameter of "Establishment clause" included in an "RRC Connection Request" message defined by "3GPP (3rd Generation Partnership Project)." When the wireless base station device is designed for WCDMA, it can be determined that the user has originated a call when a call origination request is received from a portable terminal through "PRACH (Physical Random Access Channel)." When the wireless base station device is designed for LTE (Long Term Evolution, it can be determined that the user has originated a call when a call origination request is received from the portable terminal through "UL-SCH (Uplink Shared Channel)."

Power control unit 13 determines at step S15 whether or not the wireless base station device is permitted to be transitioned from the lower-power consumption mode to the normal mode by a user who is not registered in the wireless base station device. When the transition to the normal mode is not permitted if a user who its not registered in the wireless base station device is present in the area, power control unit 13 determines whether or not the user present in the wireless area has been registered in the wireless base station device (step S16). When the user present in the wireless area has been registered in the wireless base station device, power control unit 13 instructs power supply unit 14 to supply the power to wireless transmission unit 11 and wired communication unit 12 (step S17), thereby causing the wireless base station device to transition to the normal mode (step S18).

In this regard, it can be determined whether or not a user present in a wireless area has been registered in the wireless base station device, for example, by "IMSI (International Mobile Subscriber Identity)" which is a parameter of "initial USE identity" included in the "ARC Connection Request" message defined by "3GPP (3rd Generation Partnership Project)." When the wireless base station device is designed for WCDNIA, confirmation is made as to whether "IMSI" has been previously registered when the "RRC Connection Request" message is received through "PRACH (Physical Random Access Channel)." When the wireless base station device is designed for LTE (Long Term Evolution), confirmation is made as to whether "IMSI" has been previously registered when the "RRC Connection Bequest" message is received through "UL-SCH (Uplink Shared Channel)."

On the other hand, when it is determined at step S14 that the user has not originated a call, or when it is determined at step S16 that the user who is present in the wireless area has not been registered in the wireless base station device, power control unit 13 returns to step S 12 to repeat the determination processing as to whether or not the wireless base station device should be transitioned to the normal mode.

The wireless base station device of this embodiment, by virtue of the power control unit provided therein, can automatically recover to the normal mode when the user has originated a call even if it is in the low-power consumption mode. Thus, the user can always utilize communications through the wireless base station device installed in a home, in an office, or the like to make high-speed data communications with a discounted charge plan.

Also, the wireless base station device of this embodiment automatically recovers to the normal mode even before the user originates a call, if the user is present in the wireless area. Accordingly, the user can reduce connection time before he can start a communication.

Further, the wireless base station device of this embodiment confirms that a portable terminal has been registered in the wireless base station device. Accordingly, the wireless base station device can be prevented from erroneously recovering from the low-power consumption mode to the normal mode.

Notary the wireless base station device of this embodiment only uses commands that are standardized for use in communications, and docs not use special, non standardized commands. Thus, the wireless base station device can exercise power control over itself through communicating with a generally used portable terminal.

In the above, the present invention has been described with reference to the exemplary embodiments, but the present invention is not limited to the exemplary embodiments, A configuration and details of the present invention may be modified in various ways within the scope of the present invention in a manner that a person skilled in the art can understand.

This application claims the benefit of priority from Japanese Patent Application No. 2008-266193 filed in Japan on October 15, 2008, the entire content of which is hereby incorporated by reference in the application and claims of the present application.

### Description of reference numbers

- 10: wireless reception unit
- 11: wireless transmission unit
- 12: wired communication unit
- 13: power control unit
- 14: power supply unit
- 20: wireless base station device
- 21: portable terminal
- 22: IP network
- 24: gateway
- 25: portable terminal network
- 26: portable terminal base station
- 27: portable terminal on the other end

## Claims

1. A wireless base station device that is connected to an IP network through a wireline and that is capable of communicating with a portable terminal over the air, comprising,
a wireless reception unit that receives data transmitted from said portable terminal,
a wireless transmission unit that transmits data to said portable terminal
a wired communication unit that transmits data received by said wireless reception unit to said IP network, and that transmits data received from said IP network to said wireless transmission unit
a power supply unit that supplies power to said wireless reception unit, said wireless transmission unit, and said wired communication unit; and
a power control unit that causes said power supply unit to stop supplying the power to said wireless transmission unit and said wired communication unit when said power control unit detects that said portable terminal is not present in a wireless area of said wireless base station device or when a previously set time is reached, and that causes said power supply unit to supply the power to said wireless transmission unit and to said wired communication unit when said wireless reception unit receives a call origination request from said portable terminal.

2. The wireless base station device according to claim 1, wherein:
said power control unit causes said power supply unit to supply the power to said wireless transmission unit and to said wired communication unit when said power control unit detects that said portable terminal is present in the wireless area.

3. The wireless base station device according to claim 1 or 2, wherein:
said power control unit authenticates a portable terminal from which said wireless base station device has received data, and causes said power supply unit to supply the power to said wireless transmission unit and to said wired communication unit only when said portable terminal is a portable terminal of a previously registered user.

4. A power control method for a wireless base station device that is connected to an IP network through a wireline and that is capable of communicating with a portable terminal over the air, said method comprising:
stopping supplying power to a wireless transmission unit for transmitting data to said portable terminal, and a wired communication unit for transmitting data receded from said portable terminal over the air to said IP network and for transmitting data received from said IP network to said wireless transmission unit when said power control unit detects that said portable terminal is not present in a wireless area of said wireless base station device or when a previously set time is reached; and
supplying the power to said wireless transmission unit and said wired communication unit upon receipt of a call originating request from said portable terminal.

5. The power control method according to claim 4, comprising:
supplying the power to said wireless transmission unit and said wired communication unit when detecting that said portable terminal is present in the wireless area.

6. The power control method according to claim 4 or 5, comprising:
authenticating a portable terminal from which data has been received, and supplying the power to said wireless transmission unit and to said wired communication unit only when said portable terminal is a portable terminal of a previously registered user.

## Amended claims

### Amended claims under Art. 19.1 PCT

**1.** After amendment)
A wireless base station device that is connected to a network through a wireline and that is capable of communicating with a portable terminal over the air, comprising:
a wireless reception unit that receives data transmitted from said portable terminal;
a wireless transmission unit that transmits data to said portable terminal
a wired communication unit that transmits data received by said wireless reception unit to said network, and that transmits data received from said network to said wireless transmission unit;
a power supply unit that supplies power to said wireless reception unit, said wireless transmission unit, and said wired communication unit, and
a power control unit that causes said power supply unit to supply the power to said wireless transmission unit and to said wired communication unit when said wireless reception unit receives a call origination request from said portable terminal while said power supply unit t stoups supplying the power to said wireless transmission unit and said wired communication unit.

**2.** The wireless base station device according to claim 1, wherein:
said power control unit causes said power supply unit to supply the power to said wireless transmission unit and to said wired communication unit when said power control unit detects that said portable terminal is present in the wireless area.

**3.** The wireless base station device according to claim 1 or 2, wherein:
said power control unit authenticates a portable terminal from which said wireless base station device has received data, and causes said power supply unit to supply the power to said wireless transmission unit and to said wired communication unit only when said portable terminal is a portable terminal of a previously registered user.

**4.** After amendment)
A power control method for a wireless base station device that is connected to a network through a wireline and that is capable of communicating with a portable terminal over the air, said method comprising:
supplying the power to a wireless transmission unit and a wired communication unit upon receipt of a call originating request from said portable terminal while stopping supplying power to said wireless transmission unit for transmitting data to said portable terminal and said wired communication unit for transmitting data received from said portable terminal over the air to said network and for transmitting data received from said network to said wireless transmission unit.

**5.** The power control method according to claim 4, comprising:
supplying the power to said wireless transmission unit and said wired communication unit when detecting that said portable terminal is present in the wireless area.

**6.** The power control method according to claim 4 or 5. comprising:
authenticating a portable terminal from which data has been received, and supplying the power to said wireless transn1isSlon unit and to said wired communication unit only when said portable terminal its a portable terminal of a previously registered user.
